# EUROPÄISCHE PATENTSCHRIFT

(11) **EP 1 640 896 B1**
(45) Veröffentlichungstag und Bekanntmachung des Hinweises auf die Patenterteilung: **09.03.2016**
(21) Anmeldenummer: 04104733.3
(22) Anmeldetag: 28.09.2004
(51) Int. Cl.: G07F 7/06, G06Q 20/10, G06Q 20/32, G06Q 10/00

(54) **Verfahren zur Wiederverwertung von Produkten**
Method for recycling products
Methode pour le recyclage de produits

(43) Veröffentlichungstag der Anmeldung: 29.03.2006
(73) Patentinhaber: Swisscom AG, 3050 Bern (CH)
(72) Erfinder: Ritter, Rudolf, 3052 Zollikofen (CH)
(74) Vertreter: P&TS SA (AG, Ltd.)

(56) Entgegenhaltungen:
- WO-A-02/39357
- WO-A-02/080121
- DE-A1- 19 910 005
- US-A- 4 717 026
- US-A- 5 628 412
- US-A1- 2002 152 179

## Beschreibung

Die vorliegende Erfindung betrifft ein Verfahren zur Wiederverwertung von Produkten.

Bei der Wiederverwertung mehrerer Produkte wie zum Beispiel Glas- oder PET-Flaschen werden Benutzer, die ein solches Produkt zum Beispiel an einem dafür bestimmten Sammelpunkt abgeben, mit der Rückerstattung eines Pfandes, welches üblicherweise ein kleiner Geldbetrag ist, belohnt. Das Pfand dient meistens hauptsächlich dazu, die Benutzer anzuregen, die Flaschen oder andere Produkte an bestimmten Sammelpunkten zurückzubringen und nicht einfach in einem üblichen Mülleimer wegzuwerfen. Für andere Produkte, die beispielsweise nicht einfach entsorgt werden können und/oder für die Umwelt bedenkliche Substanzen enthalten, was deren Wiederverwertung teuer macht, wird ein Teil oder der Gesamtbetrag der Kosten für die Wiederverwertung dem Benutzer, welcher ein solches Produkt abgibt, verrechnet.

Aus dem Stand der Technik sind zum Beispiel Sammelpunkte für Glas- oder PET-Flaschen in Läden bekannt, welche eine Quittung automatisch herstellen, wenn entsprechende Flaschen abgegeben werden. Der Benutzer muss dann mit der Quittung zu einer Kasse gehen, um das Pfand bar oder auf eine Rechnung für weitere Einkäufe gutgeschrieben zu bekommen. Ein Nachteil solcher Sammelpunkte ist, dass der Benutzer das Pfand nur dann zurückerstattet erhält, wenn der Laden offen ist. Ein solches Verfahren ist ausserdem umständlich und teuer für den Laden.

Zur Verrechnung der durch die Wiederverwertung von bestimmten Produkten verursachten Geldbeträge werden diese zum Beispiel beim Einkauf des entsprechenden Produktes verrechnet. Sie müssen aber nachher vom Laden zum Beispiel der wiederverwertenden Institution weitergeschickt werden, was oft eine aufwändige Operation darstellt, bei welcher auch noch Fehler auftreten können.

Die durch die Wiederverwertung verursachten Geldbeträge sind ausserdem meistens relativ klein. Die Verwaltung von solchen im Stand der Technik oft noch mindestens teilweise manuellen Geldtransaktionen ist also relativ teuer im Verhältnis zu den Geldbeträgen selber.

WO02080121 offenbart eine Ausführungsform, in der ein Lastwagen beispielsweise Müll in einer Mülldeponie ablädt. Der Lastwagen wird gewogen und entsprechend dem veränderten Gewicht ein Preis berechnet. Das System sieht vor, dass sich der Lastwagenfahrer danach durch ein Mobilgerät mit einem Kontrollsystem verbindet und die Abrechnung vornimmt.

DE19910005A1 offenbart ein autmatisiertes Kaufhaus, in dem auch eine Rücknahme von Pfandflaschen ermöglicht wird und einer Erstattung des Pfandes stattfindet.

Ein Ziel der Erfindung ist es, ein Verfahren zur Wiederverwertung von Produkten vorzuschlagen, welches die Nachteile der Verfahren aus dem Stand der Technik nicht aufweist.

Zusätzlich wird ein Verfahren zur einfachen Gutschreibung und/oder Verrechnung von Beträgen an einen Benutzer für die Wiederverwertung von Produkten beschrieben.

Dieses Ziel wird durch ein Verfahren zur Wiederverwertung von Produkten erreicht, welche die Merkmale des unabhängigen Anspruchs aufweist. Vorteilhafte Ausführungsformen werden ausserdem in den abhängigen Ansprüchen angegeben.

Mit dem Verfahren zusätzlich beschriebenen wird eine durch die Wiederverwertung des Produktes verursachte Belohnung oder Belastung automatisch bestimmt und auf einem mit einem Idenfizierungsmodul verknüpften Konto gutgeschrieben oder verrechnet.

Die Erfindung wird anhand der Beschreibung einer bevorzugten Ausführungsform und mit Hilfe der Zeichnung besser verstanden. Es zeigt:

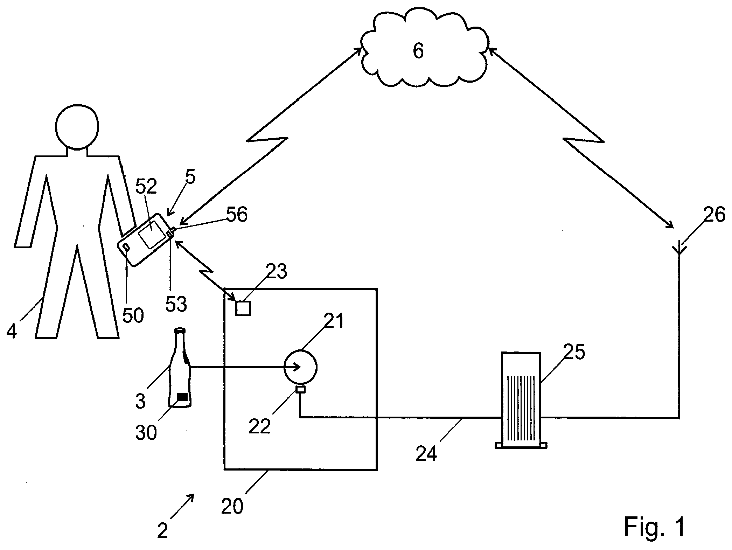

Fig. 1 eine schematische Darstellung des Verfahrens der Erfindung gemäss einer Ausführungsform.

In einer Ausführungsform der Erfindung, die schematisch in der Fig. 1 dargestellt ist, ist das wiederzuverwertende Produkt 3 mit einem RFID-Tag 30 markiert, welches einen EPC-Kode d.h., einen Identifizierungskode, enthält. Im dargestellten Beispiel ist das wiederzuverwertende Produkt eine leere Flasche. Im Rahmen der Erfindung kann aber das Produkt auch ein Kleiderstück, ein elektronisches Gerät, metallische Gegenstände, usw. sein.

Im Rahmen der Erfindung kann das wiederzuverwertende Produkt auch der Kode selber sein. In einer solchen Ausführungsform ist also das wiederzuverwertende Produkt ein EPC-Kode, welcher in einem RFID-Tag zur Identifizierung eines bestimmten Objekt gespeichert ist. In einer Ausführungsform wird der Kode zum Beispiel dadurch wiederverwertet, dass der Kodeträger wie zum Beispiel das RFID-Tag vom identifizierten Produkt getrennt wird, möglicherweise gesammelt wird und zur Benutzung auf einem neuen Produkt verfügbar gemacht wird. In einer anderen Ausführungsform wird der Kode aus dem Kodeträger gelesen und unabhängig vom Kodeträger wiederverwertet, indem er zum Beispiel an einen Server elektronisch geschickt wird und beispielsweise in einer Datenbank von neu verfügbaren Kodes gesammelt wird. Der Kodeträger wird dann vorzugsweise vernichtet, gelöscht oder als ungültig markiert, während der Kode beispielsweise an einen späteren Zeitpunkt zur Identifizierung eines neuen Produkts benutzt wird. Das wiederzuverwertende Produkt kann ein einzelner Kode und/oder eine Gruppe von zum Beispiel hintereinander folgenden Kodes sein.

RFID-Tags bestehen hauptsächlich aus einer nicht dargestellten integrierten Schaltung und einer nicht dargestellten Antenne, die mit der integrierten Schaltung elektrisch verbunden ist. Die integrierte Schaltung umfasst einen Speicherbereich, zum Beispiel einen ROM (Read-Only Memory) oder einen EEPROM (Electrically Erasable Programmable ROM), in welchem Daten gespeichert werden können. Die im RFID-Tag gespeicherten Daten dienen vorzugsweise zur Identifizierung des markierten Produktes. Sie umfassen einen Kode, welcher vorzugsweise den Typ des Produktes angibt. Der Kode kann auch noch weitere Informationen wie zum Beispiel den Namen des Herstellers des Produktes, das Produktionsdatum, den Produktionsort, usw., sowie möglicherweise eine Seriennummer enthalten.

Die in RFID-Tags gespeicherten Daten werden mit Hilfe von RFID-Lesern kontaktlos gelesen. Unter Umständen können Daten in RFID-Tags auch geschrieben werden, beispielsweise um den Endverkauf des entsprechenden Produktes oder seine Wiederverwertung anzuzeigen. Die in RFID-Tags gespeicherten Daten können auch zum Beispiel bei der Wiederverwertung oder Vernichtung der identifizierten Produkte teilweise oder komplett gelöscht werden, damit die RFID-Tags zur Identifizierung von neuen Produkten benutzt werden können und somit selber wiederverwertet werden. Die Daten, die im Speicherbereich des RFID-Tags gespeichert sind, werden über die Antenne des Tags dem Leser übermittelt. RFID-Tags sind meistens passive Elemente, die die Energie des Lesers benützen, um die Daten auszusenden.

Wenn ein mit einem RFID-Tag 30 markiertes Produkt 3 wiederverwertet wird, werden gemäss der Erfindung die im RFID-Tag 30 gespeicherten Daten vorzugsweise automatisch gelesen. Das Produkt 3 wird zum Beispiel durch einen Benutzer 4 an einen Sammelpunkt 2 gebracht, wo ein oder mehrere Container 20 zur Sammlung eines oder mehrerer Typen von wiederzuverwertenden Produkten vorhanden sind. Wenn das Produkt 3 durch den Benutzer 4 in den entsprechenden Container 20 abgegeben wird, wird das RFID-Tag 30 durch einen im Container 20 integrierten RFID-Leser 22 gelesen.

Die gelesenen Daten werden verwendet, um das abgegebene wiederzuverwertende Produkt 3 zu identifizieren und evtl. zusätzlich um zu kontrollieren, ob ein Pfand oder eine Gebühr durch seine Wiederverwertung verursacht wird. Die gelesenen Daten umfassen zum Beispiel einen Kode, welcher den Produkttyp, den Produkthersteller, das Produktionsdatum, usw. angibt. Der Kode ist erfindungsgemäß ein EPC-Kode. Mit diesem EPC Kode kann also vorzugsweise auf PML-Seiten in einer oder mehreren Datenbanken zugegriffen werden, welche mit dem EPC-Kode verbunden sind und Informationen über das Produkt 3 enthalten.

Die Identifizierung des wiederzuverwertenden Produktes und evtl. zusätzlich die Bestimmung, ob ein Pfand oder eine Gebühr durch seine Wiederverwertung verursacht wird, wird zum Beispiel in einem Rechner 25 durchgeführt, welcher mit dem RFID-Leser 22 zum Beispiel über eine Datenschnittstelle 24 verbunden ist. Der Rechner 25 hat vorzugsweise Zugang zu einer nicht dargestellten Datenbank, die den Zusammenhang zwischen bestimmten Identifizierungskodes und beispielsweise dem Typ des entsprechenden Produktes angibt. Diese Datenbank kann eine Tabelle, eine PML-Seite, usw. sein, welche im Rechner 25 selber oder in einem anderen externen Server verfügbar ist. Die im RFID-Tag 30 gelesenen Daten werden vom RFID-Leser 22 an den Rechner 25 weitergeleitet, damit Letzterer den Typ des wiederzuverwertenden Produkts 3 bestimmt und evtl. zusätzlich feststellt, ob ein Pfand oder eine Gebühr durch die Wiederverwertung des Produkts 3 verursacht wird.

In einem zusätzlichen Beispiel wird ausserdem aus einer weiteren oder aus der gleichen Datenbank zum Beispiel durch den Rechner 25 auch ein Geldbetrag für das Pfand oder für die Gebühr bestimmt, welcher dem Benutzer 4, der das Produkt 3 an den Sammelpunkt 2 gebracht hat, gutgeschrieben oder verrechnet wird.

Der Benutzer 4 trägt ein Mobilgerät 5 mit sich, zum Beispiel ein Mobiltelefon, ein PDA, usw., welches vorzugsweise eine kontaktlose oder drahtlose Schnittstelle im Nahbereich 53 besitzt. Die kontaktlose Schnittstelle im Nahbereich 53 ist zum Beispiel eine Infrarote, eine Bluetooth oder eine WLAN Schnittstelle, die eine Reichweite von bis einigen Metern besitzt und eine kontaktlose oder drahtlose Kommunikation mit einer weiteren entsprechenden Schnittstelle 23 in dieser Reichweite erlaubt.

Vorzugsweise umfasst das Mobilgerät 5 auch eine Mobilfunkschnittstelle 56 für die Kommunikation in einem Mobilfunknetzwerk 6. Die Mobilfunkschnittstelle 56 ist zum Beispiel eine GSM Schnittstelle für die Kommunikation in einem GSM-Netzwerk, eine UMTS-Schnittstelle, eine WLAN- Schnittstelle, usw. Das Mobilgerät 5 umfasst ausserdem vorzugsweise ein Identifizierungsmodul 50 zur Identifizierung des Benutzers 4 und/oder des Mobilgeräts 5. Das Identifizierungsmodul 50 ist zum Beispiel eine aus dem Mobilgerät 5 abnehmbare Chipkarte, welche eine Identifizierung des Benutzers 4 und/oder des Mobilgeräts 5 im Mobilfunknetzwerk 6 erlaubt. Im Falle eines GSM-Mobiltelefons ist die Chipkarte zum Beispiel eine SIM-Karte, welche die Identifizierung des Benutzers 4 durch eine in der SIM-Karte gespeicherte MSISDN und/oder IMSI Nummer erlaubt.

In einer einfachen Ausführungsvariante ist das Mobilgerät 5 eine blosse Kunststoffkarte beispielsweise im Kreditkartenformat mit einem RFID-Tag und einer RFID-Schnittstelle 53 sein. Die RFID-Karte dient als Datenträger zwischen dem Container 20 und einem nicht dargestellten Lesemodul, das mit einem Mobilfunknetzwerk 6 verbunden ist. Somit werden die gesammelte Gutschrift und/oder die zu wiederverwerteten Kode vom Container 20 auf die RFID-Karte 5 geschrieben und in einem späteren Zeitpunkt von der RFID-Karte 5 auf den Server 25 über das Mobilfunknetzwerk 6 übertragen.

Vorzugsweise wird eine Kommunikation zwischen dem Mobilgerät 5 und dem Sammelpunkt 2, zum Beispiel mit dem Container 20, aufgebaut. Eine Kommunikation wird zum Beispiel automatisch oder manuell aufgebaut, wenn der Benutzer 4 mit dem Mobilgerät 5 sich in der Nähe des Sammelpunktes 2 befindet.

Gemäss einer Ausführungsform der Erfindung ist die Kommunikation zwischen dem Mobilgerät 5 und dem Sammelpunkt 2 eine Kommunikation im Nahbereich, welche über die kontaktlose Schnittstelle im Nahbereich 53 des Mobilgeräts 5 und eine ähnliche kontaktlose oder drahtlose Schnittstelle im Nahbereich 23 im Sammelpunkt 2 - zum Beispiel im Container 20 - aufgebaut wird. In einer Variante erkennt zum Beispiel der Sammelpunkt 2, dass sich ein Mobilgerät 5 mit einer kontaktlosen Schnittstelle im Nahbereich 53 in seiner Nähe befindet. Ein Kommunikationsaufbau wird dann automatisch vom Sammelpunkt 2 initiiert. In einer anderen Variante wird der Kommunikationsaufbau durch den Benutzer 4 initiiert, indem er zum Beispiel ein entsprechendes Signal mit seinem Mobilgerät 5 an den Sammelpunkt 2 sendet.

Gemäss einer anderen Ausführungsform der Erfindung wird die Kommunikation zwischen dem Mobilgerät 5 und dem Sammelpunkt 2 über das Mobilfunknetzwerk 6 aufgebaut, wobei der Sammelpunkt 2 vorzugsweise mit einer Mobilfunkschnittstelle 26 für die Kommunikation im Mobilfunknetzwerk 6 versehen ist. In einer Variante wird die Kommunikation mit Meldungen wie zum Beispiel SMS-, USSD-, MMS-Meldungen oder E-Mails durchgeführt. In einer anderen Variante wird eine Telefon- und/oder Datenkommunikation zum Beispiel durch das WEB oder das WAP zwischen dem Mobilgerät 5 und dem Sammelpunkt 2 aufgebaut.

Nachdem das wiederzuverwertende Produkt 3 durch den Rechner 25 mit Hilfe der im RFID-Tag 30 gespeicherten Daten identifiziert wird und/oder nachdem festgestellt wird, dass seine Wiederverwertung pfand- oder gebührenpflichtig ist, zum Beispiel nachdem es in den Container 20 abgegeben wird, wird ein erstes Signal durch den Sammelpunkt 2 an das Mobilgerät 5 gesendet. Gemäss einer Ausführungsform der Erfindung wird das erste Signal über die kontaktlose Schnittstelle im Nahbereich 23 gesendet. Gemäss einer anderen Ausführungsform der Erfindung wird das erste Signal über die Mobilfunkschnittstelle 26 zum Beispiel in Form einer SMS-, USSD-, MMS-Meldung oder E-Mail gesendet. Möglicherweise umfasst das erste Signal Informationen über den Typ des wiederzuverwertenden Produkts 3 und/oder über einen durch die Wiederverwertung des Produktes 3 verursachten Geldbetrag. In einer Variante der Erfindung ist aber das erste Signal zum Beispiel nur ein Signalpuls, welcher im empfangenden Mobilgerät 5 als Signal, dass ein Produkt 3 eines bestimmten Typs wiederzuverwerten ist, interpretiert wird.

Das erste Signal wird vorzugsweise signiert, verschlüsselt und/oder mit einem Zeitstempel versehen, um seine Verfälschung zu vermeiden und um vorzugsweise eine Identifizierung des sendenden Sammelpunktes 2 zu erlauben.

Das erste Signal wird im Mobilgerät 5 empfangen und zum Beispiel durch ein im Mobilgerät 5 laufendes Programm interpretiert. Durch diese Interpretation des ersten Signals erfasst das Mobilgerät 5, dass ein Produkt 3 wiederzuverwerten ist. Vorzugsweise zeigt dann das Programm bestimmte Informationen über das wiederzuverwertende Produkt 3 auf einer Anzeige 52 des Mobilgeräts 5 an, damit der Benutzer 4 zum Beispiel kontrollieren kann, dass das von ihm abgegebene Produkt 3 richtig erkannt wurde. Die angezeigten Informationen umfassen zum Beispiel den Typ des Produktes 3, den Wert des Pfandes oder der Wiederverwertungsgebühr, usw.

Im ersten Signal werden in einer Ausführungsform ausser den mit dem Produkt 3 verknüpften Informationen auch noch weitere Meldungen an das Mobilgerät 5 gesendet. Diese Meldungen umfassen zum Beispiel ein Dankeswort für die Wiederverwertung des Produktes 3, gezielte Werbung, die mit dem wiederzuverwertenden Produkt 3 verknüpft ist, Entsorgungsrichtlinien, Wegweiser zum Standort des nächsten Sammelpunkts, usw. Diese Meldungen werden dann vorzugsweise vom Programm im Mobilgerät 5 interpretiert und möglicherweise auf der Anzeige 52 und/oder akustisch angezeigt. In einer Variante der Erfindung werden diese Meldungen im Mobilgerät 5 zum Beispiel durch das Programm vorbereitet.

Nach der Erfindung wird der Benutzer 4, zum Beispiel durch das Programm im Mobilgerät 5, gebeten, die Richtigkeit der angezeigten und mit dem Produkt 3 verbundenen Informationen, insbesondere die Richtigkeit des Produkttyps, zu bestätigen. Die Bestätigung erfolgt zum Beispiel durch Betätigung einer Taste des Mobilgeräts 5, durch die Auswahl einer Option in einem Programmmenü, usw. Die Bestätigung wird dann vorzugsweise durch das im Mobilgerät 5 laufende Programm empfangen und interpretiert. Das Programm bereitet dann vorzugsweise ein Bestätigungssignal vor, welches durch das Mobilgerät 5 an den Sammelpunkt 2 gesendet wird, damit zum Beispiel der Container 20 das Produkt 3 annimmt. Nach der Erfindung wird das wiederzuverwertende Produkt 3 vor seiner Abgabe in dem Container 20 identifiziert, und der Container 20 wird nur dann geöffnet, wenn ein Bestätigungssignal, wonach das Produkt 3 richtig identifiziert wurde, durch den Sammelpunkt 2 empfangen wurde.

Falls der Benutzer 4 die Richtigkeit der angezeigten Informationen nicht bestätigt, zum Beispiel indem er eine entsprechende Option in einem Programmmenü auswählt oder indem er innerhalb einer gewissen Zeitspanne nicht reagiert, wird dann vorzugsweise ein negatives Signal durch das Programm vorbereitet und durch das Mobilgerät 5 an den Sammelpunkt 2 gesendet. Der Container 20 wird dann nicht geöffnet. Der Benutzer 4 kann dann die Wiederverwertung des Produkts 3 im gleichen oder in einem anderen Container 20 und/oder Sammelpunkt 2 wieder versuchen.

Die Informationen über das wiederzuverwertende Produkt 3, wie zum Beispiel der Typ des Produktes, der durch die Wiederverwertung des Produktes 3 verursachte Geldbetrag, usw., wovon vorzugsweise mindestens ein Teil auf der Anzeige 52 des Mobilgeräts 5 angezeigt werden, sind nach der Erfindung im ersten Signal enthalten. Diese Informationen werden dann vom Programm im Mobilgerät 5 gelesen und wenn nötig angezeigt. In einer weiteren Ausführungsform der Erfindung wird mindestens ein Teil dieser Informationen aus einer nicht dargestellten Datenbank wie zum Beispiel aus einer im Mobilgerät 5 und/oder in einem entfernten Server gespeicherten Tabelle, aus einer PML-Seite, usw., geholt. In einer noch weiteren Ausführungsform sind gewisse Informationen implizit bestimmt, weil sie zum Beispiel für einen bestimmten Produkttyp immer gleich sind. Es ist zum Beispiel der Fall für das Pfand für die Wiederverwertung von gewissen Produkten.

Wird das Produkt 3 durch den Sammelpunkt 2 angenommen, wird zum Beispiel ein Pfand oder eine Wiederverwertungsgebühr dem Benutzer 4 gutgeschrieben respektive verrechnet. Das Pfand oder die Wiederverwertungsgebühr wird vorzugsweise auf einem mit dem Identifizierungsmodul 50 verknüpften Geldkonto gutgeschrieben bzw. abgebucht.

In einem Beispiel ist das Geldkonto ein vom Mobilgerät 5 externes mit dem Identifizierungsmodul 50 verknüpftes Konto. Es ist zum Beispiel ein Debitkonto in einer Bank, ein Kreditkartenkonto, ein vorbezahltes Konto, ein Konto bei einem externen Finanzinstitut, usw. Eine Meldung wird dann vorzugsweise durch das Programm im Mobilgerät 5 oder durch den Sammelpunkt 2 zum Beispiel im Server 25 vorbereitet, mit der Information, dass ein wiederzuverwertendes Produkt 3 eines bestimmten Typs an einen Sammelpunkt 2 gebracht und/oder abgegeben wurde. Die Meldung enthält vorzugsweise eine Identifizierung des Benutzers 4 und/oder des Identifizierungsmoduls 50. In einer Variante enthält die Meldung auch den durch die Wiederverwertung des Produktes 3 verursachten Geldbetrag. Die Meldung wird vorzugsweise über die Mobilfunkschnittstelle 56 oder 26 an den Betreiber des Geldkontos gesendet. Im Falle eines GSM-Netzwerks ist die zweite Meldung zum Beispiel eine SMS-, MMS- oder USSD-Meldung, eine E-Mail, usw. In einer Variante besteht die Meldung aus mehreren Meldungen, wobei die zur Gutschreibung oder Verrechnung des Geldbetrages nötigen Informationen in diesen mehreren Meldungen zum Beispiel aufgeteilt werden. In dieser Variante wird beispielsweise eine Meldung mit Identifizierungsdaten aus dem Identifizierungsmodul 50 durch das Programm im Mobilgerät 5 vorbereitet, während eine weitere Meldung mit dem Typ des Produkts 3 und/oder mit dem durch die Wiederverwertung des Produkts 3 verursachten Geldbetrag durch den Sammelpunkt 2 vorbereitet und gesendet wird.

In einer Variante wird das Konto zum Beispiel durch den Betreiber des Mobilfunknetzes 6 verwaltet. Der Geldbetrag wird zum Beispiel auf einer mit dem Mobilteilnehmer verknüpften Rechnung gutgeschrieben oder verrechnet. Die Rechnung ist zum Beispiel die Telefonrechnung des Benutzers 4 für die Benutzung des Mobilgeräts 5 im Mobilfunknetz 6. Die Meldung mit den zur Gutschreibung oder Verrechnung nötigen Informationen wird dann vorzugsweise direkt an den Betreiber des Mobilfunknetzwerks 6 gesendet.

In einem weiteren Beispiel wird das Pfand oder die Wiederverwertungsgebühr auf einem im Mobilgerät 5 gespeicherten Geldkonto gutgeschrieben, respektiv abgebucht. Das Geldkonto ist dann zum Beispiel ein e-cash Konto, welches zum Beispiel auf dem Identifizierungsmodul 50 gespeichert ist. In diesem Fall werden die Informationen wie der Typ des Produktes 3 und der durch seine Wiederverwertung verursachte Geldbetrag vorzugsweise direkt im Mobilgerät 5 zum Beispiel durch das Programm bearbeitet.

In einem weiteren Beispiel ist kein Geldbetrag durch die Wiederverwertung des Produktes 3 direkt verursacht. Bei der Wiederverwertung des Produktes 3 wird hingegen der Benutzer 4 in einem Anbindungsprogramm eingeschlossen. Bei der Wiederverwertung jedes Produktes 3 wird beispielsweise ein zum Beispiel elektronischer Gutschein dem Benutzer 4 ausgesendet oder für den Benutzer 4 in einer nicht dargestellten Zentrale gesammelt. Nach einer vorbestimmten Anzahl Gutscheine wird der Benutzer 4 zum Beispiel mit einem neuen Produkt 3 oder mit einem anderen Preis belohnt.

Erfindungsgemäß ist das Produkt 3 mit einem RFID-Tag 30 markiert. Auf andere Weise kann das Produkt 3 auch mit einem Strichkode oder mit einem anderen Identifizierungssystem markiert sein. Der Leser 22 im Sammelpunkt 2 wird in diesem Fall vorzugsweise dem Typ der Markierung angepasst.

Nach der Erfindung ist das Pfand 3 mit einem EPC-Kode identifiziert. Gemäss dem EPC Global System wird jedes einzige Produkt 3 mit einem einmaligen Kode identifiziert. Verschiedene Informationen über das Produkt sind dann vorzugsweise auf verschiedenen Servern durch PML-Seiten verfügbar, wobei der EPC-Kode als Schlüssel zu diesen Informationen dient. Die auf den PML-Seiten verfügbaren Informationen umfassen dann beispielsweise:
▪ den Typ des Produktes 3,
▪ den mit seiner Wiederverwertung verknüpften Geldbetrag (Pfand oder Wiederverwertungsgebühr),
▪ eine Liste der Sammelpunkte, welche Produkte dieses Typs annehmen,
▪ Daten über das Anbindungsprogramm,
▪ Informationen über Sammelaktionen in einer bestimmten Periode oder an einem bestimmten Ort,
▪ die Identität des Endkäufers und/oder des Besitzers des Produkts,
▪ usw.

Diese Informationen oder nur ein Teil davon sind dem Benutzer 4 vorzugsweise verfügbar, zum Beispiel indem er eine bestimmte Abfrage mit dem EPC-Kode des Produktes 3 vorbereitet und zum Beispiel einem bestimmten Server zukommen lässt. Gewisse Informationen aus PML-Seiten werden auch beispielsweise bei der Wiederverwertung des Produktes 3 geholt. Diese Informationen umfassen zum Beispiel den Typ des Produktes, das Pfand oder die Wiederverwertungsgebühr, Daten über das Anbindungsprogramm, usw.

In einem Beispiel wird die Identität des Endkäufers oder des Besitzers des Produkts 3 aus einer PML-Seite geholt, wenn das Produkt an den Sammelpunkt 2 gebracht und identifiziert wird. Die Identität des Endkäufers oder des Besitzers umfasst dann vorzugsweise auch Daten über das Identifizierungsmodul eines Mobilgeräts, zum Beispiel eine Mobiltelefonnummer des Endkäufers oder des Besitzers. Gemäss dieser Ausführungsform wird zum Beispiel keine Kommunikation zwischen dem Mobilgerät 5 und dem Sammelpunkt 2 aufgebaut. Das durch die Wiederverwertung des Produktes 3 verursachte Pfand oder die durch die Wiederverwertung des Produktes 3 verursachte Gebühr wird auf einem Konto gutgeschrieben bzw. abgebucht, welches mit den aus der PML-Seite geholten Daten über das Identifizierungsmodul verknüpft ist.

In einer Ausführungsform der Erfindung wird keine Kommunikation im Nahbereich zwischen dem Sammelpunkt 2 und dem Mobilgerät 5 aufgebaut. Bei der Abgabe des zu wiederverwertenden Produktes 3 sendet zum Beispiel der Benutzer 4 ein erstes Signal an eine beispielsweise im Sammelpunkt 2 angegebene Adresse oder Telefonnummer mit seinem Mobilgerät 5 über die Mobilfunkschnittstelle 56. In einem GSM-Netzwerk ist dieses Signal zum Beispiel eine SMS-, eine MMS- oder eine USSD-Meldung. Mit diesem Signal wird das Mobilgerät 5 im Sammelpunkt 2 identifiziert, zum Beispiel indem eine Anrufer-Telefonnummer (CLI) im Rechner 25 bestimmt wird. Ein zweites Signal, das möglicherweise den Typ des Produkts 3 und/oder den durch die Wiederverwertung des Produkts 3 verursachten Geldbetrag enthält, wird dann an das Mobilgerät 5 vorzugsweise auch über das Mobilfunknetzwerk 6 gesendet.

In einer noch weiteren Ausführungsform wird die Kommunikation zwischen dem Mobilgerät 5 und dem Sammelpunkt 2 manuell initiiert, zum Beispiel durch Betätigung einer Tastatur im Sammelpunkt 2, auf welcher der Benutzer 4 die Telefonnummer des Mobilgeräts 5 eingibt oder sich anders identifizieren lässt.

Das Verfahren der Erfindung ist vorzugsweise automatisch und wird vorzugsweise mindestens teilweise in einem bestimmten Sammelpunkt 2 durchgeführt. Im Rahmen der Erfindung kann das Verfahren auch teilweise manuell durchgeführt werden. In einer Ausführungsform wird zum Beispiel der Sammelpunkt 2 manuell betrieben. Das erste Signal und/oder das zweite Signal werden dann zum Beispiel manuell durch einen Operator vorbereitet. Der Typ des Sammelpunktes 2 und/oder des Containers 20 kann im Rahmen der Erfindung sehr unterschiedlich sein. Es wird insbesondere an den Typ des wiederzuverwertenden Produktes 3 angepasst.

Das im Mobilgerät 5 laufende Programm zur Durchführung des Verfahrens der Erfindung wird vorzugsweise im Mobilgerät 5 zum Beispiel in einem Speicherbereich des Identifizierungsmoduls 50 gespeichert. Das Programm wird vorzugsweise im Mobilgerät 5 geladen, indem es zum Beispiel als Applet, als plug-in, als aufrufbare Dateien, usw., aus einem externen Datenträger wie zum Beispiel aus einer Festplatte in einem externen Server ferngeladen wird.

## Patentansprüche

1. Verfahren zur Wiederverwertung von Produkten, welches folgende Schritte umfasst:
- Lesen eines EPC-Kodes eines RFID-Tags (30), mit welchen ein Produkt (3) markiert ist, durch einen im Container (20) integrierten RFID-Leser (22) an einem Container (20) eines Sammelpunkts (2), und Identifizierung des Produkts (3) anhand des EPC-Kodes;
- Senden von Informationen über das Produkt (3) an ein Mobilgerät (5) eines Benutzers (4),
- Anzeige von Informationen über das Produkt (3) auf einer Anzeige (52) des Mobilgeräts (5), damit der Benutzer kontrollieren kann, dass das Produkt richtig erkannt wurde;
- Bestätigung oder Nicht-Bestätigung der Richtigkeit der angezeigten Informationen über das Produkt (3) durch den Benutzer,
- Senden eines Bestätigungssignals von dem Mobilgerät (5) an den Sammelpunkt (2), falls der Benutzer die Richtigkeit der angezeigten Information über das Produkt (3) bestätigt hat,
- Annahme des Produkts (3) in dem Container (20), wobei der Container (20) nur dann geöffnet wird, wenn das Bestätigungssignal, dass das Produkt (3) richtig identifiziert wurde, durch den Sammelpunkt (2) empfangen wurde.

2. Verfahren gemäss Anspruch 1, **dadurch gekennzeichnet, dass** die Informationen und das Bestätigungssignal über eine kontaktlose Schnittstelle im Nahbereich (53) gesendet werden.

3. Verfahren gemäss Anspruch 1, **dadurch gekennzeichnet, dass** die Informationen und das Bestätigungssignal über ein Mobilfunknetz (6) gesendet werden.

4. Verfahren gemäss einem der Ansprüche 1 bis 3, **dadurch gekennzeichnet, dass** falls der Benutzer (4) die Richtigkeit der Informationen nicht bestätigt, ein negatives Signal an den Sammelpunkt (2) gesendet wird und der Container (20) nicht geöffnet wird.

5. Verfahren gemäss einem der Ansprüche 1 bis 4, **dadurch gekennzeichnet, dass** der RFID-Tag von Produkt getrennt wird und zur Benutzung auf einem neuen Produkt verfügbar gemacht wird.

6. Verfahren gemäss einem der Ansprüche 1 bis 4, **dadurch gekennzeichnet, dass** der EPC-Kode auf dem RFID-Tag gelesen wird und unabhängig vom RFID-Tag wieder verwertet wird.

7. Verfahren gemäss Anspruch 6, **dadurch gekennzeichnet, dass** der Kode zu einem Server geschickt wird und in einer Datenbank von neu verfügbaren Kodes gesammelt wird.

8. Verfahren gemäss Anspruch 6, **dadurch gekennzeichnet, dass** der RFID-Tag vernichtet oder als ungültig markiert wird.

9. Verfahren gemäss einem der Ansprüche 1 bis 8, **dadurch gekennzeichnet, dass** das Produkt (3) anhand des EPC-Kodes anhand einer Datenbank eines Rechners (25) identifiziert wird.

10. Verfahren gemäss einem der Ansprüche 1 bis 9, **dadurch gekennzeichnet, dass** ein Programm im Mobilgerät (5) vorhanden ist, welches die Informationen über das Produkt anzeigt, und das Bestätigungssignal an den Sammelpunkt (2) sendet.

11. Verfahren gemäss Anspruch 10, **dadurch gekennzeichnet, dass** die Bestätigung der Richtigkeit der angezeigten Informationen durch die Auswahl in einem Programmmenü erfolgt.

12. Verfahren gemäss Anspruch 11, **dadurch gekennzeichnet, dass** der Benutzer (4) die Richtigkeit der angezeigten Informationen nicht bestätigt, in dem er eine Option in einem Programmmenü auswählt.

## Claims

1. Method for reuse of products which comprise the following steps:
- reading of an EPC code of an RFID tag (30) with which a product (3) is marked by an RFID reader (22) integrated in a container (20) at the container of a collecting point (2), and identifying of the product (3) on the basis of the EPC code;
- sending of the information about the product (3) to a mobile device (5) of a user (4);
- displaying of information about the product (3) on a display (52) of the mobile device (5) so that the user can control that the product is recognized correctly;
- confirming or non-confirming of the correctness of the displayed information about the product (3) by the user;
- sending of a confirmation signal from the mobile device (5) to the collecting point (2), if the user has confirmed the correctness of the displayed information about the product (3);
- accepting the product (3) in the container (20), wherein the container (20) is opened only then, if the confirmation signal that the product is correctly identified is received by the collecting point.

2. Method according to claim 1 **characterized in that** the information and the confirmation signal are sent over the contactless interface in the nearfield

3. Method according to claim 1 **characterized in that** the information and the confirmation signal are sent over a mobile radio network (3).

4. Method according to one of claims 1 to 3, **characterized in that**, if the user (4) does not confirm the correctness of the signal, a negative signal is sent to the collecting point (2) and the container (20) is not opened.

5. Method according to one of claims 1 to 4 **characterized in that** the RFID tag of the product is separated and is made available for the use on a new product.

6. Method according to one of claims 1 to 4, **characterized in that** the EPC code on the RFID tag is read and is reused independently from the RFID tag.

7. Method according to claim 6, **characterized in that** the code is sent to a server and is collected in a database for newly available codes.

8. Method according to claim 6, **characterized in that** the RFID tag is destroyed or marked as invalid.

9. Method according to one of claims 1 to 8, **characterized in that** the product (3) is identified on the basis of a database of a computer (25).

10. Method according to one of claims 1 to 9, **characterized in that** a program is present in the mobile device (5) which shows the information about the product, and sends the confirmation signal to the collecting point.

11. Method according to claim 10 **characterized in that** the confirmation of the correctness of the shown information happens by the selection in a program menu.

12. Method according to claim 11 **characterized in that** the user (4) does not confirm the correctness of the shown information by selecting an option in a program menu.

## Revendications

1. Méthode pour le recyclage de produits, comprenant les étapes suivantes:
- lecture d'un code de produit électronique (EPC, Electronic Product Code) d'une radio-étiquette (RFID, Radio Frequency Identification) (30) marquant un produit (3), par le biais d'un lecteur RFID (22) intégré dans le conteneur (20) sur un conteneur (20) d'un point de collection (2), et identification du produit (3) sur la base du code EPC;
- envoi d'informations relatives au produit (3) à un appareil mobile (5) d'un utilisateur (4);
- affichage d'informations relatives au produit (3) sur un affichage (52) de l'appareil mobile (5) afin der permettre à l'utilisateur de contrôle que le produit a été reconnu correctement;
- confirmation ou non confirmation par l'utilisateur si les informations relatives au produit (3) affichées sont correctes;
- envoi d'un signal de confirmation de l'appareil mobile (5) au point de collection (2), si l'utilisateur a confirmé que l'information affichée relative au produit (3) est correcte;
- réception du produit (3) dans le conteneur (20), le conteneur (20) ne s'ouvrant que lorsque le signal de confirmation que le produit (3) a été identifié correctement a été reçu par le point de collection (2).

2. Méthode selon la revendication 1, **caractérisée en ce que** les informations et le signal de confirmation sont envoyés au travers d'une interface sans contact à courte distance (53).

3. Méthode selon la revendication 1, **caractérisée en ce que** les informations et le signal de confirmation sont envoyés au travers d'un réseau de communication radio mobile (6).

4. Méthode selon l'une des revendications 1 à 3, **caractérisée en ce que** si l'utilisateur (4) n'a pas confirmé que les informations sont correctes, un signal négatif est envoyé au point de collection (2) et le conteneur (20) ne s'ouvre pas.

5. Méthode selon l'une des revendications 1 à 4, **caractérisée en ce que** l'étiquette RFID est séparée du produit et mise à disposition sur un nouveau produit.

6. Méthode selon l'une des revendications 1 à 4, **caractérisée en ce que** le code EPC sur l'étiquette RFID est lu et recyclés à nouveau indépendamment de l'étiquette RFID.

7. Méthode selon la revendication 6, **caractérisée en ce que** le code est envoyé à un serveur et rassemblé dans une base de données de codes nouvellement disponibles.

8. Méthode selon la revendication 6, **caractérisée en ce que** l'étiquette RFID est détruite ou marquée comme non valable.

9. Méthode selon l'une des revendications 1 à 8, **caractérisée en ce que** le produit (3) est identifié sur la base du code EPC sur la base d'une base de données d'un ordinateur (25).

10. Méthode selon l'une des revendications 1 à 9, **caractérisée en ce qu'**un programme est présent dans l'appareil mobile (5) qui affiche des informations relatives au produit et envoie le signal de confirmation au point de collection (2).

11. Méthode selon la revendication 10, **caractérisée en ce que** la confirmation que les informations affichées sont correctes s'effectue par sélection dans un menu de programme.

12. Méthode selon la revendication 11, **caractérisée en ce que** l'utilisateur (4) confirme si les informations affichées ne sont pas correctes en sélectionnant une option dans un menu de programme.
